# EUROPEAN PATENT APPLICATION

(11) **EP 2 495 370 A1**
(43) Date of publication of application: **05.09.2012**
(21) Application number: 11001808.2
(22) Date of filing: 04.03.2011
(51) Int. Cl.: E02D 27/42, E02B 17/02, F03D 1/00

(54) **In-line piling method for offshore wind turbine foundation applications**

(71) Applicant: Leenaars, Cees Eugen Jochem, 3225LE Hellevoetsluis (NL)
(72) Inventor: Leenaars, Cees Eugen Jochem, 3225LE Hellevoetsluis (NL)

(57) **Abstract**

The invention relates to a method for installing offshore wind turbine foundations (1), specifically of the jacket type, on the sea bottom (4) by means of driving the piles (7) into the seabed (4) in-line with the legs (2) of the jacket (1). As a result the jacket (1) and piles (7) are subjected to little bending loads introduced by wind and waves. This method allows the jacket (1) and piles (7) to be optimised in order to conceive lighter structures.

## Description

### Background of the invention

The present invention relates to an in-line piling method for offshore wind turbine foundations, specifically of the jacket type, where the piles are driven into the seabed under the same angles as the legs of the structures.

### Description of the Related Art

For water depths between 30-60m the jacket is the most likely type of wind turbine foundation. The jacket structure often consists of three or four corner legs which are positioned under an angle such that the longitudinal axes meet near the nacelle of the wind turbine. The legs are mutually connected by truss work.

In general, jacket foundations are connected to the sea bottom by means of driving steel piles, one for each leg, into the soil first (pre-piling) and then connecting the bottom part of the jacket structure to the top part of the piles. Usually the diameter of the piles is slightly larger than the diameter of the bottom part of the legs, thus making it possible for the bottom part of the legs to be placed into the piles (approximately 2-3 metres). Alternatively the legs may be fitted with external sleeves serving a similar purpose. At this interface a permanent connection is made between jacket and piles. Several different method exist for this, the most common being grouting. Other alternatives are swaging and welding.

In addition, piles can be driven through the leg from the top and welded to the jacket once in place (post-piling). This method has often been applied before in the oil- and gas industry for shallow water production platforms on jacket support structures, but is yet unimplemented for offshore wind applications.

Up to now the piles are always driven into the seabed in a vertical manner. When the piles are driven vertically into the soil they will deflect below the seabed to resist the horizontal loads induced by wind and waves. The jackets and piles are designed to withstand these bending loads.

The object of the present invention is to establish a piling method such that the piles will merely be axially loaded and not deflect due to bending loads.

### Description of the invention

In order to avoid these bending loads and make the jacket foundation more cost effective, a method is hereby stated for connecting the jacket to the sea bottom by means of driving the piles in-line with the jacket legs i.e. under the same angle such that the longitudinal axes of the piles and legs coincide.

This is advantageous in that very little bending loads are introduced in the piles i.e. the piles are mostly loaded axially. Consequently the piles can be optimized with smaller pipe diameters and smaller wall thicknesses resulting in overall weight reduction of the steel piles.

Further, it is advantageous that the piles are installed at the same angle as the jacket legs so that no bending loads are introduced in the jacket structure as well. Similar to the piles, the jacket can be optimized with smaller pipe diameters and thicknesses leading to overall weight reduction of the jacket.

Due to the optimized jacket construction with smaller leg diameters and trusses, the jacket itself becomes more transparent to passing waves resulting in even less load impacts. The structure is thus less subjected to environmental loading.

Common practice is to install one pile at each corner of the jacket, however, it may well be possible to install multiple piles at each corner. This will mainly depend on local soil characteristics and foundation design.

### Description of the drawings

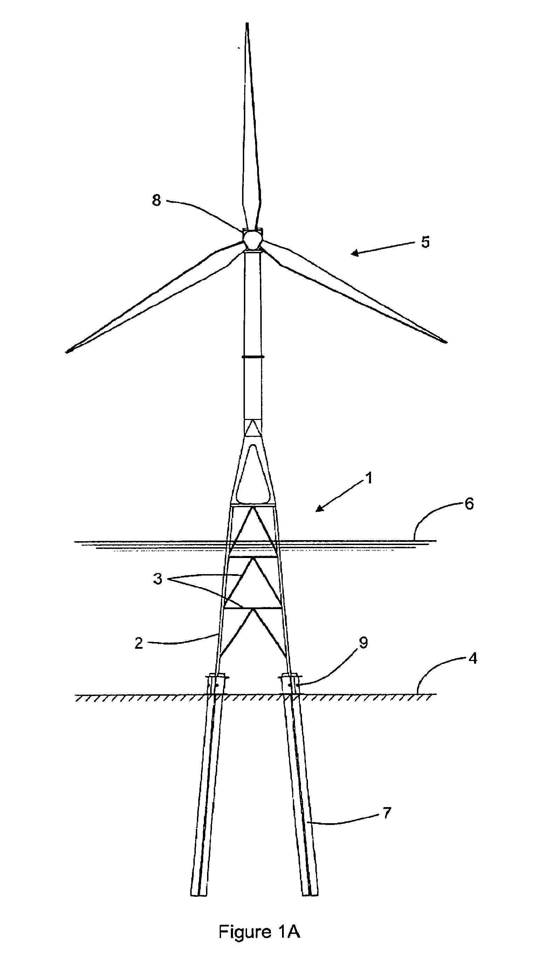

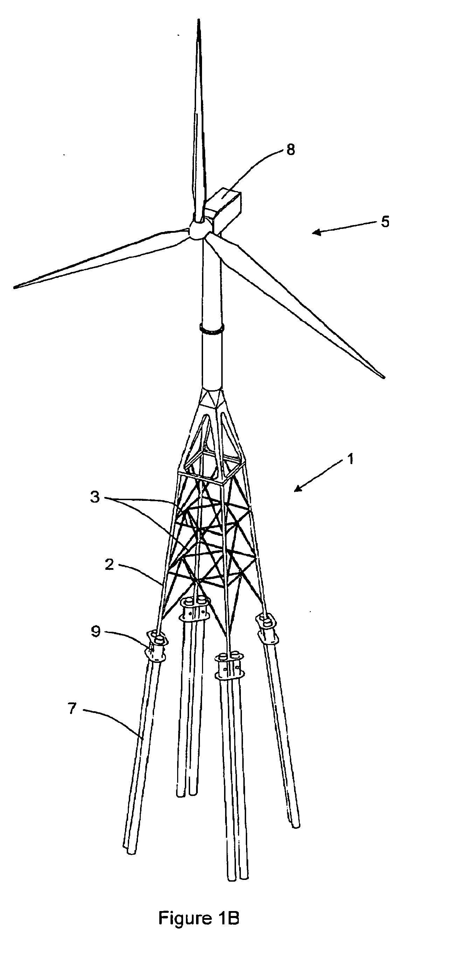

Figures 1A and 1B show a constructional offshore jacket foundation (1), consisting of four legs (2) mutually connected by truss bracings (3), standing on the seabed (4) supporting a wind turbine (5) above the waterline (6). The piles (7) are driven into the seabed (4) in-line with the legs (2), such that the longitudinal axes of the piles (7) coincide near the nacelle (8) of the wind turbine (5). The illustrated connection type for the jacket-piles interface is a double sleeve (9) at each corner of the jacket (1), through which the piles (7) are driven and permanently fixed in the sleeve (9) by means of e.g. grouting or swaging.

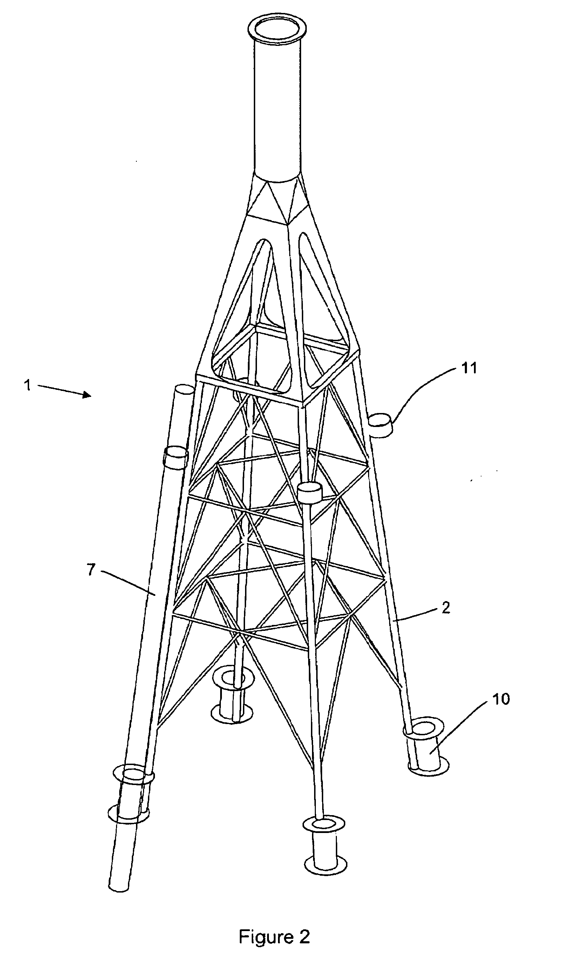

Figure 2 shows a similar jacket construction (1) as illustrated in Figure 1A and 1B, but instead of a double sleeve suiting two piles per corner, this figure illustrates a jacket (1) with a sleeve (10) at each corner suiting a single pile (7). Temporary sleeves at the top of the jacket (11) serve the purpose of guiding the piles (7) into the seabed under the correct angle i.e. in-line with the legs (2).

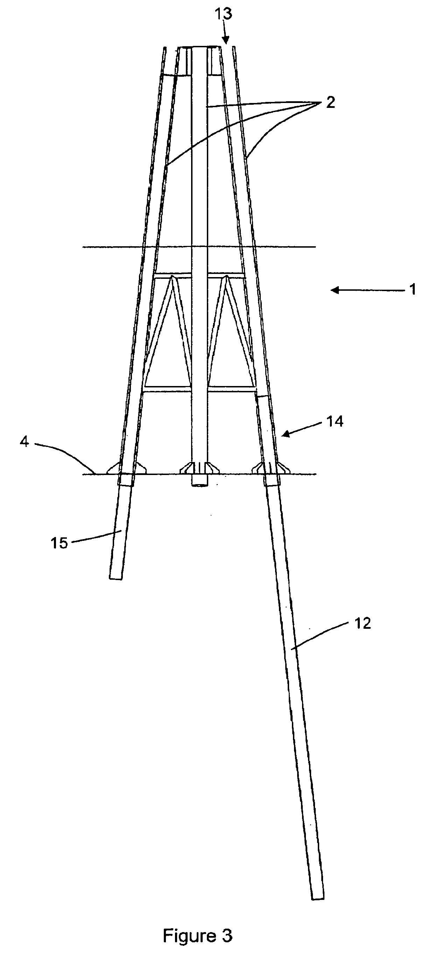

Figure 3 shows a constructional offshore jacket foundation (1) during the process of installation, whereby the pile on the right side (12) has been driven into the seabed (4) through one of the jacket's legs (2) from the top (13). At the interface (14) where the pile partially remains in the leg (2) a permanent connection is made by means of any of the methods as mentioned above. The pile on the left side (15) is partially driven into the seabed (4) to illustrate the process of this pile installation method. By driving the piles (12,15) through the legs (2) of the jacket (1), the piles (12,15) are fully in-line with the legs (2) once installed, thus obtaining the method stated for this invention.

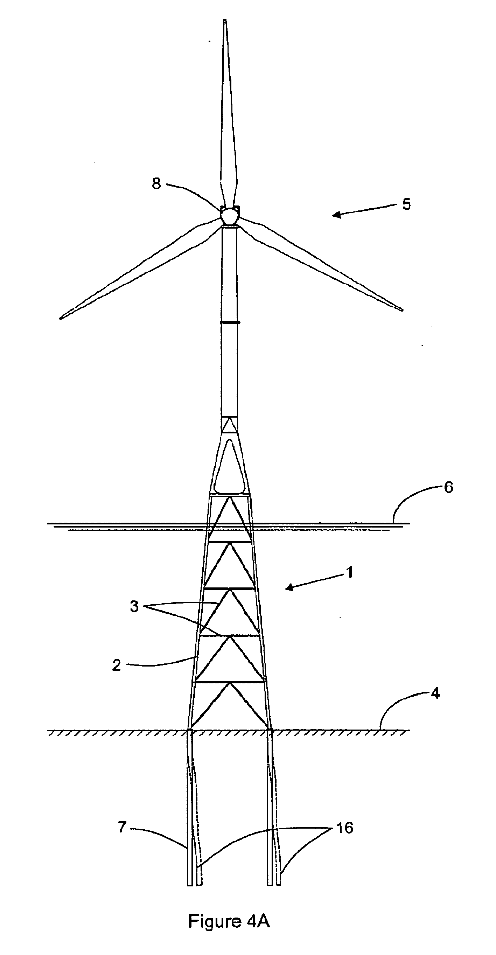

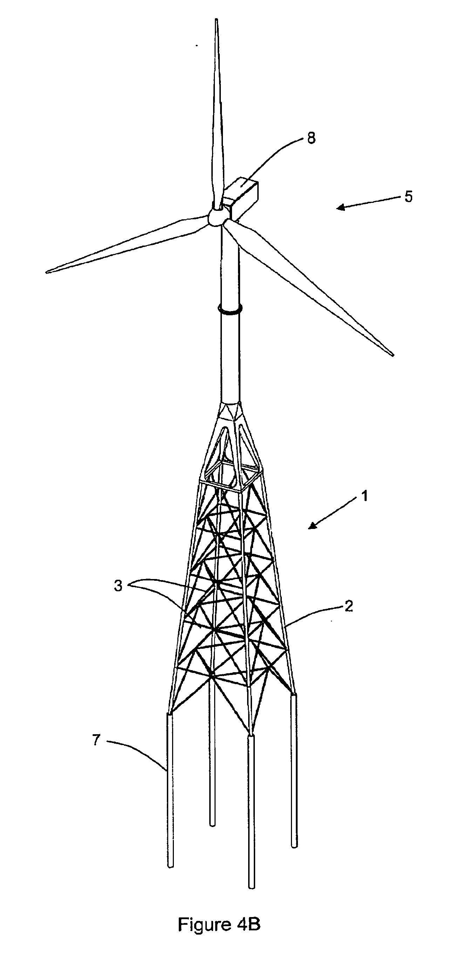

Figures 4A and 4B show a constructional offshore wind turbine (5) with its jacket foundation (1) fixed to the seabed (4) according to prior art, whereby the piles (7) are driven vertically into the seabed (4) with a certain angle between the longitudinal axes of the jacket (1) and the piles (7). As a result the piles (7) will deflect (16) under the seabed (4) due to wind and wave forces acting on the wind turbine (5) and foundation (1).

## Claims

1. A piling method for offshore wind turbine foundation applications whereby the foundation, specifically of the jacket type, comprises of at least three legs, which are mutually connected by truss bracings, and serves the purpose of supporting a wind turbine above sea level and is connected to the sea bottom by means of piles which are driven into the soil and connected to the jacket, **characterized in that** the piles are driven into the soil under the same angle as the legs of the jacket foundation.

2. A piling method in accordance with Claim 1, **characterized in that** the longitudinal axes of the legs and piles very much coincide.
